(19)

Europäisches
Patentamt
European
Patent Office
Office européen
des brevets

(11)  **EP 2 189 322 B1**

(12)  **EUROPEAN PATENT SPECIFICATION**

(45) Date of publication and mention
of the grant of the patent:
**24.10.2018 Bulletin 2018/43**

(51) Int Cl.:
***B60L 11/18*** *(2006.01)*

(21) Application number: **09014504.6**

(22) Date of filing: **20.11.2009**

(54) **STORAGE BATTERY SYSTEM, MONITORING DEVICE AND HYBRID RAILWAY VEHICLE**

AKKUMULATORSYSTEM, ÜBERWACHUNGSVORRICHTUNG UND
HYBRIDSCHIENENFAHRZEUG

SYSTÈME DE BATTERIE DE STOCKAGE, DISPOSITIF DE SURVEILLANCE ET VÉHICULE
FERROVIAIRE HYBRIDE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.11.2008 JP 2008296419**

(43) Date of publication of application:
**26.05.2010 Bulletin 2010/21**

(73) Proprietor: **Hitachi, Ltd.
Chiyoda-ku
Tokyo 100-8280 (JP)**

(72) Inventors:
• **Nishino,Takayoshi
Tokyo 100-8220 (JP)**

• **Ishida, Seiji
Tokyo 100-8220 (JP)**
• **Arita, Hiroshi
Tokyo 100-8220 (JP)**
• **Toyota, Eiichi
Ibaraki 312-8506 (JP)**

(74) Representative: **Beetz & Partner mbB
Patentanwälte
Steinsdorfstraße 10
80538 München (DE)**

(56) References cited:
**EP-A2- 1 289 096      EP-A2- 1 689 129
EP-A2- 1 925 493**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the invention

The present invention relates to a storage battery system, a monitoring device thereof and a hybrid railway vehicle using the same, and more specifically, relates to a system including a large number of storage batteries connected in series, and a monitoring device for monitoring the statuses thereof.

Description of the related art

Storage batteries capable of charging and discharging power repeatedly are used widely as power supply devices.

There are appropriate ranges for the statuses of storage batteries such as the storage quantity, the charge-discharge current or the temperature, and the use of batteries exceeding these ranges may lead to deteriorated performances. Therefore, systems utilizing storage batteries normally have a status monitoring device of storage batteries for controlling the charging and discharging of batteries within the appropriate ranges.

In a power system for automobiles where the scale of output significantly exceeds the output of a single storage battery cell, multiple storage batteries are connected in series, which results in increasing the size of the status monitoring device of the storage battery and lines connected thereto.

Japanese patent application laid-open publication No. 9-139237 (patent document 1) discloses amonitoring device having a monitoring unit provided to every unit of a group of batteries connected in series (module battery) of the multiple storage batteries connected in series, wherein the status data of storage batteries are communicated among the monitoring units with the signals isolated, so that a monitoring device having a small size and capable of preventing dangers due to the high voltage of storage batteries is provided.

However, according to the monitoring device of patent document 1, if the device is used continuously with a failure of the signal isolation area existing latently, and as a result the signal isolation between monitoring units is broken, there is a possibility of danger such as a component such as a CPU constituting the monitoring unit being broken by the high voltage corresponding to the module battery, or the module battery being short-out.

The document Ep 1 289 096 A2 discloses a battery system having low order control devices connected without isolation.

SUMMARY OF THE INVENTION

The object of the present invention is to provide a safe and small storage battery system capable of finding a failure portion of signal isolation at an early stage, a monitoring device thereof and a hybrid railway vehicle using the same.

In order to solve the problem mentioned above, the present invention provides a storage battery system according to claim 1, which may have a plurality of storage batteries connected in series and a plurality of processing means for detecting the respective statuses of the storage batteries. The system may further comprise a plurality of assembled resistances composed of two or more resistances connected in series, having one end connected to a positive terminal of the storage battery and the other end connected to a negative terminal of the same storage battery, and respectively determining a midpoint potential higher than the negative terminal potential and lower than the positive terminal potential; and a plurality of communication means at the respective negative terminal potentials of the plurality of storage batteries for enabling the processing means to communicate with each other or for enabling the processing means to communicate with an exterior via an isolation means; wherein the processing means are respectively at the midpoint potentials determined by the assembled resistances, having a current detection means for detecting the current flowing in the assembled resistances.

Further, the present invention provides a storage battery system having a plurality of storage batteries connected in series and a plurality of processing means for detecting the respective statuses of the storage batteries, the system comprising a plurality of assembled resistances composed of two or more resistances connected in series, having one end connected to a positive terminal of the storage battery and the other end connected to a negative terminal of the same storage battery, and respectively determining a midpoint potential higher than the negative terminal potential and lower than the positive terminal potential; and a plurality of communication means at the respective negative terminal potentials of the plurality of storage batteries for enabling the processing means to communicate with each other or for enabling the processing means to communicate with an exterior via an isolation means; wherein the processing means are respectively at the midpoint potentials determined by the assembled resistances, having a voltage detection means for detecting the voltage of a portion of the assembled resistances.

Further, the present invention provides a monitoring device comprising an assembled resistance composed of two or more resistances connected in series, having one end connected to a positive terminal of storage batteries connected in series and the other end connected to a negative terminal of the same storage battery, and determining a midpoint potential higher than the negative terminal potential and lower than the positive terminal potential; a processing means for detecting a status of the storage battery; and two or more communication means at the respective negative terminal potentials of the plurality of storage batteries for enabling the processing means to communicate with each other or for enabling the processing means to communicate with an exterior via an isolation means; wherein the processing means are respectively at the midpoint potentials determined by the assembled resistances, having a current detection means for detecting the current flowing in the assembled resistance.

Furthermore, the present invention provides a hybrid railway vehicle utilizing the storage battery system disclosed above as a power supply device.

The present invention enables to provide a safe and small storage battery system capable of discovering the failure portion of signal isolation at an early stage, a monitoring device thereof and a hybrid railway vehicle using the same.

BRIEF DESCRIPTION OF THE DRAWINGS

FIG. 1 is a view showing the storage battery system according to embodiment 1;
FIG. 2 is a view showing a power unit structure of a hybrid railway vehicle utilizing the storage battery system according to embodiment 1;
FIG. 3 is a view showing the circuit composed of an assembled resistance and signal isolation means of a monitoring device according to the storage battery system of embodiment 1;
FIG. 4 is a view showing the process flow of a microcomputer of the monitoring device according to the storage battery system of embodiment 1;
FIG. 5 is a view showing the process flow for checking the isolation abnormality of a microcomputer of the monitoring device according to the storage battery system of embodiment 1;
FIG. 6 is a view showing how the status of the storage battery is acquired via communication according to the storage battery system of embodiment 1; and
FIG. 7 is a chart showing the data transmitted from the monitoring device according to the storage battery system of embodiment 1.

DETAILED DESCRIPTION OF THE PREFERRED EMBODIMENTS

Now, the preferred embodiments of the storage battery system, monitoring device thereof and hybrid railway vehicle using the same according to the present invention will be described with reference to the drawings.

[Embodiment 1]

First, we will describe a hybrid railway vehicle utilizing the storage battery system according to the present invention.

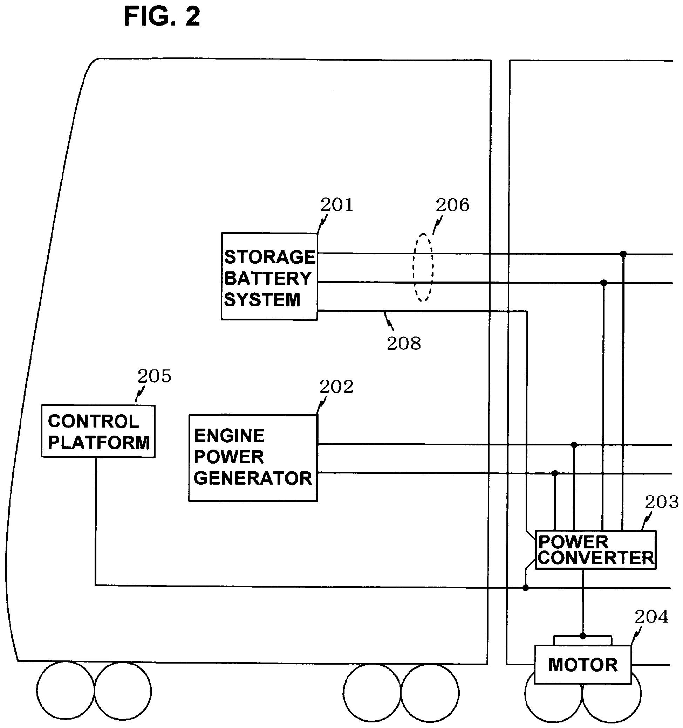

FIG. 2 shows a power unit configuration of a hybrid railway vehicle traveling by using two power sources in combination. A control platform 205 sends an operation command to a power converter 203 based on the operation status. In response to the operation command, the power converter 203 controls the rotation of a motor 204 connected to an axle of a traction wheel. At this time, the power supplied to the motor 204 is obtained either from an engine power generator 202 or a storage battery system 201, or from both. The engine power generator 202 supplies the power generated by driving a power generator via an engine to the power converter 203 at a direct current rating of 1500 V. The storage battery system 201 is equipped with a chargeable-dischargeable storage battery, wherein the power thereof is supplied via a power line 206 to the power converter 203 at a direct current rating of 1500 V, and the regenerative electric power from the motor 204 is charged in the storage battery.

The storage battery system 201 can transmit the status data of the storage battery to the power converter 203 via a communication line 208. The power converter 203 adjusts the ratio of power obtained from the storage battery system 201 to the total required power based on the status of the storage battery. Further, the status data of the storage battery is transmitted to the control platform 205. The data can be used for example to adjust the operation or to determine the maintenance timing.

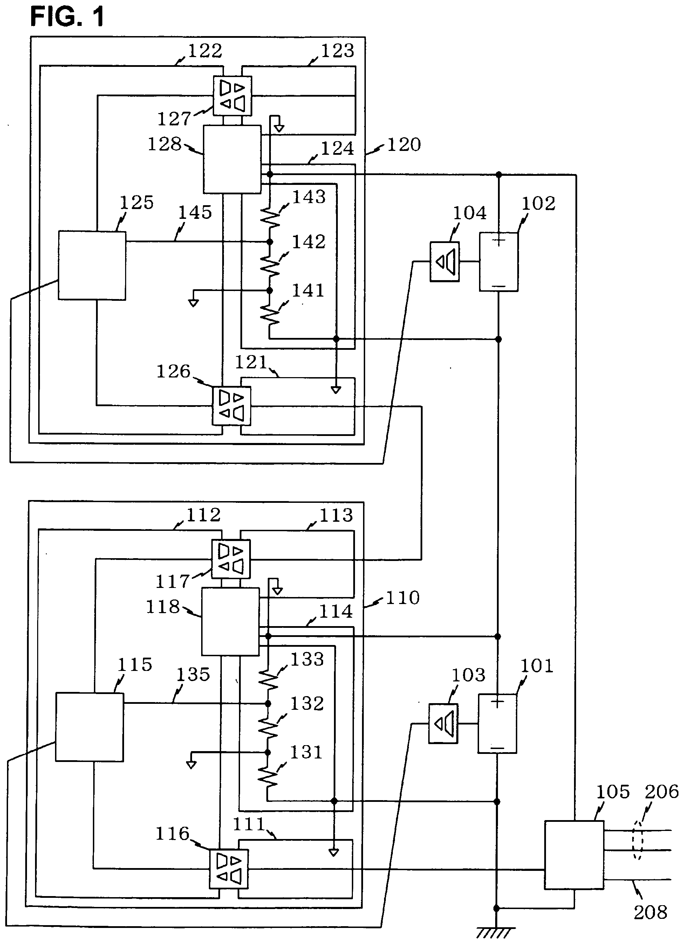

FIG. 1 shows a configuration of a storage battery system 201. Storage battery 101 and storage battery 102 are chargeable-dischargeable batteries respectively having a rating of 500 V. The two batteries are connected in series to form an assembled battery having a rating of 1000 V, wherein both ends of the assembled battery is connected via a control unit 105 to a power line 206, through which the battery is charged and discharged.

The control unit 105 performs voltage conversion so that the assembled battery can perform charging and discharging with respect to an equipment having a rating of 1500 V. This can be realized for example via an up/down converter. Further, the control unit 105 is connected to a monitoring device 110 so as to receive the status data of the storage batteries 101 and 102, and transmits the same via a communication line 208 connected to the power converter 203.

The monitoring device 110 is composed of mutually insulated four circuits (a communication circuit 111, a processing circuit 112, a communication circuit 113 and a power supply circuit 114) . A microcomputer 115 disposed on the processing circuit 112 has three lines of communication ports (hereinafter referred to as communication port L, communication port M and communication port H) and a single line of analog input port. The communication port M is connected to a voltage sensor 103 for sensing the voltage of the storage battery 101 and transmitting the same via signal isolation, and receives the voltage information periodically. The communication port L communicates via a signal isolation means 116 and the communication circuit 111 with the control unit 105. The communication port H communicates via a signal isolation means 117 and the communication circuit 113 with the monitoring device 120. The analog input port is connected to an analog signal line 135, and detects the voltage of a resistance 132. The connection destination of the analog signal line 135 will be described later.

The communication circuit 111 is connected to the control unit 105, and performs signal conversion so as to relay the communication between the microcomputer 115 and the control unit 105. The power supply thereof is obtained from the control unit 105. The communication circuit 113 is connected to the monitoring device 120, and relays the signal transmission between the microcomputer 115 and the monitoring device 120. The power supply source and the connection destination thereof will be described later.

The power supply circuit 114 comprises an assembled resistance formed by connecting three resistances (resistance 131, resistance 132 and resistance 133) in series, and an insulation power supply means 118. The insulation power supply means 118 is connected to both ends of the storage battery 101, so as to convert the voltage of the storage battery 101 to operation voltages of the processing circuit 112 and the communication circuit 113, and to supply insulated power supply respectively. For example, a switching power supply utilizing an insulated transformer having two lines of output can be used as the insulated power supply means 118.

The assembled resistance is connected to both ends of the storage battery 101 by having one end of the resistance 131 connected to a negative terminal of the storage battery 101, the other end thereof connected to one end of the resistance 132, the other end of the resistance 132 connected to one end of the resistance 133, and the other end of the resistance 133 connected to a positive terminal of the storage battery 101. The resistance value of the assembled resistance is determined so that the voltage of the storage battery 101 is divided into two at a connection point of the resistance 131 and the resistance 132, and that the voltage between both ends of the resistance 132 does not exceed the voltage detectable via the analog input port of the microcomputer 115.

The connection point of the resistance 131 and the resistance 132 is connected to a reference potential of the processing circuit 112. The connection point of the resistance 132 and the resistance 133 is connected via an analog signal line 135 to the analog input port of the microcomputer 115. In other words, the analog input port of the microcomputer 115 detects the voltage between both ends of the resistance 132. The connection point of the resistance 131 and the negative terminal of the storage battery 101 is connected to a reference potential of the communication circuit 111. The connection point of the resistance 133 and the positive terminal of the storage battery 101 is connected to a reference potential of the communication circuit 113.

The configuration of the monitoring device 120 is similar to that of the monitoring device 110. Corresponding to the control circuit 111, the processing circuit 112, the communication circuit 113, the power supply circuit 114, the microcomputer 115, the signal isolation means 116, the signal isolation means 117, the insulating power supply means 118, the resistance 131, the resistance 132, the resistance 133 and the analog signal line 135 of the monitoring device 110, the monitoring device 120 comprises a communication circuit 121, a processing circuit 122, a communication circuit 123, a power supply circuit 124, a microcomputer 125, a signal isolation means 126, a signal isolation means 127, an insulation power supply means 128, a resistance 141, a resistance 142, a resistance 143 and an analog signal line 145. The microcomputer 125 is connected to a voltage sensor 104 connected to the storage battery 102. The communication circuit 121 is connected to the communication circuit 113, obtains power supply from the insulation power supply means 118 and relays the signal transmission with the microcomputer 125. In other words, the microcomputer 115 and the microcomputer 125 can perform communication mutually through signal paths isolated by the signal isolation means 117 and the signal isolation means 126 and relayed via the communication circuit 113 and the communication circuit 121. The signal isolation means 127 and the communication circuit 123 are not used according to the present embodiment, but another device can be additionally disposed thereto in a manner similar to how the monitoring device 120 is connected to the communication circuit 113.

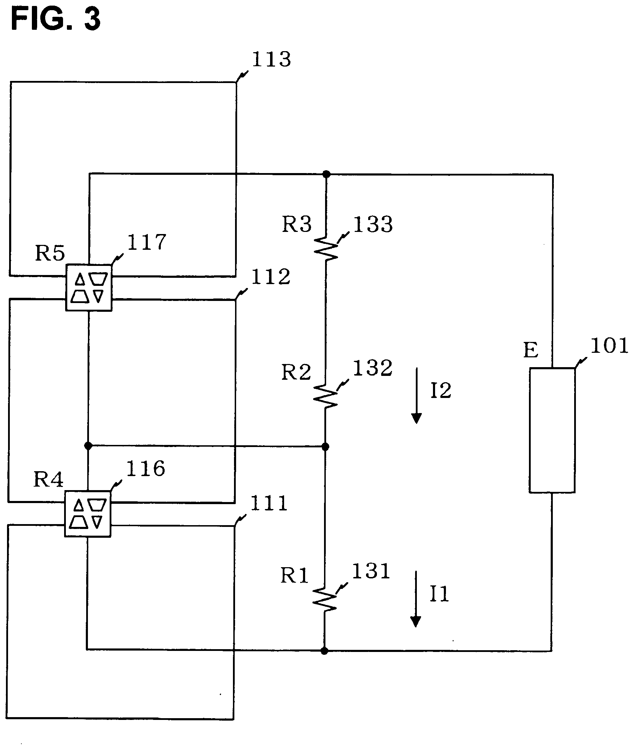

When failure occurs to the insulation of the signal isolation means 116 or the signal isolation means 117, the current flowing through the assembled resistance changes. This is described with reference to FIG. 3 illustrating the circuit related to the assembled resistance and the signal isolation means. Hereafter, the voltage of the storage battery 101 is referred to as E, the resistance value of resistance 131 is referred to as R1, the resistance value of resistance 132 is referred to as R2, the resistance value of resistance 133 is referred to as R3, the current flowing through resistance 131 is referred to as I1, and the current flowing through resistance 132 is referred to as I2.

During normal state, current is flown from the positive terminal of the storage battery 101 via the resistance 133, the resistance 132 and the resistance 131 to the negative terminal of the storage battery 101. Therefore, the voltage V2 impressed on the resistance 132 can be expressed by the following expression (1).

$$V2 = R2/(R1+R2+R3) \times E \qquad (1)$$

Next, when failure occurs to the insulation of the signal isolation means 116 and the resistance value thereof becomes R4, the current passing the resistance 133 and the resistance 132 not only flows to the resistance 131 but also flows through the signal isolation means 116 in parallel with the resistance 131. The voltage V2' impressed on the resistance 132 at this time can be expressed by the following expression (2).

$$V2' = R2/((R1 \times R4/(R1+R4))+R2+R3) \times E \qquad (2)$$

Since current flows to the signal isolation means 116, the current flowing to the resistance 132 is increased, so that V2' >V2. On the other hand, when failure occurs to the insulation of the signal isolation means 117 and the resistance value thereof becomes R5, the current also flows via the signal isolation means 117 in parallel with the resistance 133 and the resistance 132, and the total of both currents is flown via the resistance 131 to the negative terminal of the storage system 101. The voltage V2" impressed on the resistance 132 at this time can be expressed by the following expression (3).

$$V2'' = R2 \times R5/(R1 \times (R2+R3+R5)+R5 \times (R2+R3)) \times E \qquad (3)$$

Since a portion of the current flows to the signal isolation means 117 and the current flowing to the resistance 132 is reduced, so that V2" <V2. Therefore, by setting a voltage range including the voltage V2 of expression (1), it can be determined that failure has occurred to the signal isolation means 116 when the voltage between both ends of the resistance 132 detected via the analog input port is greater than the set range, and can be determined that failure has occurred to the signal isolation means 117 when the voltage is smaller than the set range.

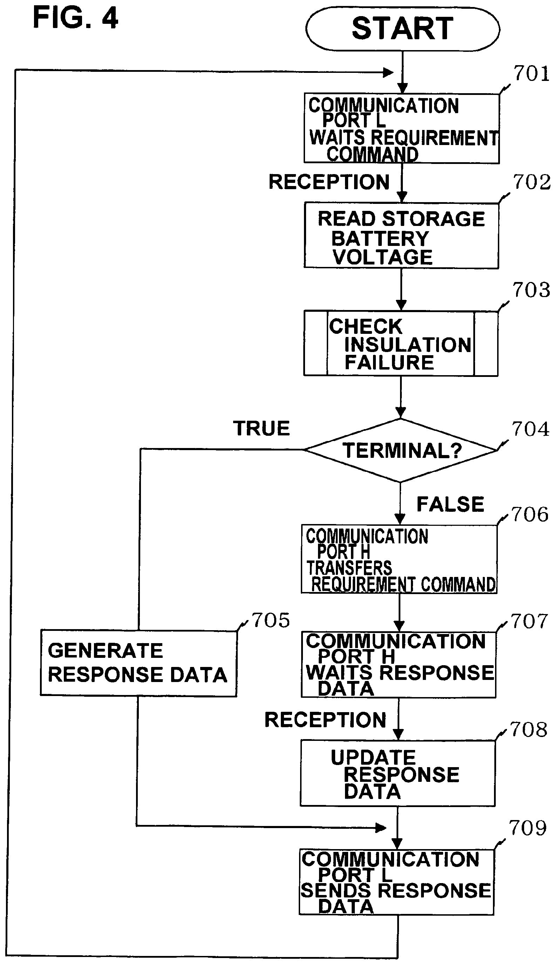

FIG. 4 shows a process flow of the microcomputer 115. First, process 701 is performed.

In process 701, reception of data is waited until a predetermined command (requirement command) is received via the communication port L. When the requirement command is received, the procedure advances to process 702.

In process 702, the voltage between both ends E of the storage battery 101 detected via the voltage sensor 103 is stored in a memory for preparation of the subsequent process . The voltage E varies in response to the state of charge or the temperature of the storage battery 101. After the process is completed, the procedure advances to process 703.

In process 703, the detection voltage of the analog input port is used to determine failure of the signal isolation means 116 and the signal isolation means 117, and as a result, obtains "normal", "abnormality of signal processing means 116" or "abnormality of signal processing means 117". The details will be described in detail later. After the process is completed, the procedure advances to process 704.

Process 704 determines whether another device to which the command received in process 701 is to be transferred is connected to the communication port H (true) or not (false) . According to one possible method of determination, the determination result can be stored in advance in a ROM of the microcomputer, and the stored result can be read out. If the result of the determination is true, the procedure advances to process 705, and if the result is false, the procedure advances to process 706.

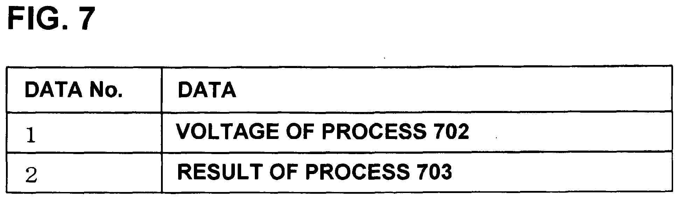

In process 705, the response data illustrated in FIG. 7 is generated. After completing the same, the procedure advances to process 709.

In process 706, the requirement command received in process 701 is sent from communication port H. After sending the same, the procedure advances to process 707.

In process 707, the communication port H waits reception of response data. After receiving the response data, the procedure advances to process 708.

In process 708, the data illustrated in FIG. 7 is added to the response data received in process 707.

In process 709, the response data is transmitted from communication port L. After completing the same, the procedure returns to process 701.

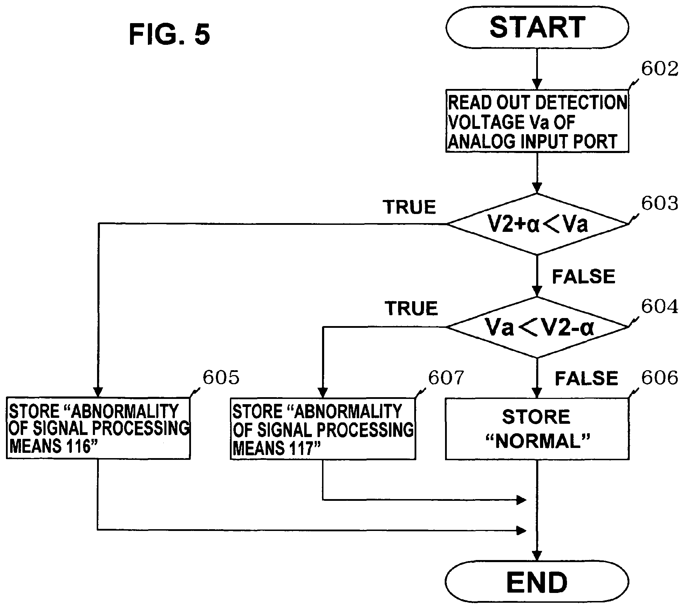

The details of the process 703 will be described with reference to FIG. 5. FIG. 5 is the process flow of process 703, which starts from process 602.

In process 602, the detection voltage of the analog input port is read out, and the procedure advances to process 603. Hereinafter, the read out value is referred to as Va.

In process 603, whether the detection voltage Va of process 602 is in an area greater than the normal range [V2-α, V2+α] including V2 of expression (1) or not is determined via expression (4). The positive number α for determining the normal range is determined considering for example the detection accuracy of the analog input port.

$$V2+\alpha < Va \qquad (4)$$

If the result of determination of expression (4) is false, the voltage Va is determined as normal and the procedure advances to process 604, and if true, the voltage Va is determined as abnormal and the procedure advances to process 605.

In process 604, whether the detection voltage Va is in a smaller area than the normal range [V2-α, V2+α] or not is determined via expression (5).

$$Va < V2-\alpha \qquad (5)$$

If the result is false, the voltage Va is determined as normal and the procedure advances to process 606, and if true, the voltage Va is determined as abnormal and the procedure advances to process 607.

In process 605, "abnormality of signal processing means 116" is stored as a result of process 703. After the process is completed, the process 703 is ended.

In process 606, "normal" is stored as a result of process 703. After the process is completed, the process 703 is terminated.

In process 607, "abnormality of signal processing means 117" is stored as a result of process 703. After the process is completed, the process 703 is terminated.

The process flow of microcomputer 125 is similar to that of microcomputer 115.

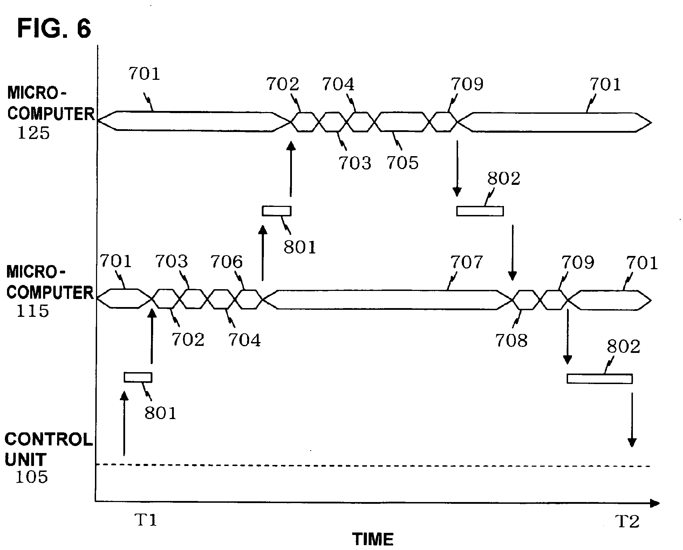

How the control unit 105 acquires the monitor data of FIG. 7 will now be described with reference to FIG. 6.

FIG. 6 illustrates the transition of the processes of microcomputer 115 and microcomputer 125 with respect to the time shown in the horizontal axis, and the transmission and reception of communication data therebetween. At time T1, the microcomputer 115 receives a requirement command 801 from the control unit 105. Thereby, the microcomputer 115 proceeds from the requirement command standby state of process 701 to the execution state, and executes processes 702, 703 and 704 in the named order. In process 704, it is judged that the procedure is not final, therefore, process 706 is executed. In process 706, the requirement command 801 is transmitted toward the microcomputer 125, and in process 707, the microcomputer is set to response data standby state. The microcomputer 125 receives the requirement command 801 and proceeds to the execution state, and executes processes 702, 703 and 704. In process 704, it is judged that the procedure is final, therefore, the procedure advances to process 705 where a response data 802 for the monitoring device 120 including the data of FIG. 7 is generated, which is sent to the microcomputer 115 at process 709, and the microcomputer is returned again to the requirement command standby state of process 701. The microcomputer 115 set to the response data standby state of process 707 receives the response data 802 from the microcomputer 125 and proceeds to process 708, adds the data of FIG. 7 regarding the monitoring device 110 to the response data 802, sends the updated response data 802 in process 709 to the control unit 105, and returns again to the requirement command standby state of process 701. In this manner, the control unit 105 acquires the response data 802 at time T2. Each time the control unit 105 sends a new requirement command 801 to the microcomputer 115, a new response data 802 can be acquired in the same manner.

The response data is transmitted from the control unit 105 via the communication line 208 to the power converter 203, and transmitted from the converter 203 to the control platform 205. Thus, it becomes possible to detect abnormality of the signal isolation means 116 or the signal isolation means 117 in this manner.

In the present embodiment, the failure of isolation performance of the signal isolation means 116 and the signal isolation means 117 in the monitoring device 110 is determined using the voltage between both ends of the resistance 132 detected by the microcomputer 115. This is based on the consideration that the range of detection of the analog input port (AD power converter) of the microcomputer is normally the positive-side voltage of the microcomputer. The resistance detected of the voltage between both ends by the analog input port is not restricted to resistance 132, and any other resistance can be used by utilizing an insulated voltage sensor. The same applies for the monitoring device 120.

Further according to the present embodiment, current is detected by the voltage drop of resistance 132, but a similar function can be realized by directly detecting the current flowing to the assembled resistance using a hole CT or the like.

As described, the first preferred embodiment of the present invention relates to a storage battery system according to the present invention, wherein the current detection means detects the current of the assembled resistance having a higher potential than the midpoint potential.

The second preferred embodiment of the present invention relates to a storage battery system according to the present invention, wherein the voltage detection means detects the voltage between both ends of the measurement resistance having the midpoint potential on one end thereof out of two or more resistances.

The third preferred embodiment of the present invention relates to a storage battery system according to the present invention, wherein the measurement resistance has a potential of the terminal connected with the midpoint potential being lower than the other terminal.

Further, the fourth preferred embodiment of the present invention relates to a storage battery system according to the present invention, wherein the monitoring device is composed of the assembled resistance, the processing means, the communication means and the insulation means, and the monitoring device monitors the status of the storage batteries connected to the monitoring device.

The above description, the claims and the drawings disclose multiple features in specific combinations. The skilled person will easily be able to find further embodiments of the invention by considering these features individually of in other combinations in order to adapt the invention to his needs without leaving the scope of the invention as defined in the independent claims.

**Claims**

1. A monitoring device (110) comprising:

    an assembled resistance composed of two or more resistances (131, 132, 133; 141, 142, 143) connected in series, configured to have one end connected to a positive terminal of a storage battery (101; 102) connected in series and the other end connected to a negative terminal of the same storage battery (101; 102), and determining a midpoint potential higher than the negative terminal potential and lower than the positive terminal potential;
    a processing means (115; 125) for detecting a status of the storage battery (101; 102); and
    two or more communication means (111; 121) at respective negative terminal potentials of the plurality of storage batteries (101) for enabling the processing means (115; 125) to communicate with the processing means (115, 125) of another monitoring device or for enabling the processing means (112) to communicate with an exterior controller (105);
    **characterized by** further comprising signal isolation means (116, 117; 126, 127) for obtaining a signal isolation in the communication between the processing means (115; 125) or the communication with said exterior controller (105);
    wherein the processing means (115; 125) connected to the midpoint potentials determined by the assembled resistances, and:

        • have a current detection means (115) for detecting the current flowing in the assembled resistance (114),

    or

        • have a voltage detection means for detecting the voltage of a portion of the assembled resistances,

    wherein the current detection means (115) or the voltage detection means are configured to determine a failure of the signal isolation means (116, 117, 126, 127) using the detected current or the detected voltage.

2. A storage battery system having a plurality of storage batteries (101, 102) connected in series and a plurality of monitoring devices (110, 120) according to claim 1 for detecting the respective statuses of the storage batteries (101, 102), the assembled resistances composed of two or more resistances (131, 132, 133; 141, 142, 143) of the monitoring devices (110, 120) having one end connected to a positive terminal of the respective storage battery (101; 102) and the other end connected to a negative terminal of the same storage battery (101; 102),

3. The storage battery system according to claim 2, including the the current detection means (115), wherein the current detection means (115) detects a current of a portion of the assembled resistances having a higher potential than the midpoint potential.

4. The storage battery system according to claim 2, including the voltage detection means, wherein the voltage detection means detects the voltage between both ends of a measurement resistance having the midpoint potential at one end thereof out of the two or more resistances (131, 132, 133; 141, 142, 143).

5. The storage battery system according to claim 4, wherein the measurement resistance has a terminal connected with the midpoint potential having a potential lower than the other terminal.

6. A hybrid railway vehicle utilizing the storage battery system disclosed in any one of claims 2 through 5 as a power supply device.

**Patentansprüche**

1. Überwachungsvorrichtung (110), aufweisend:

   einen zusammengebauten Widerstand, der aus zwei oder mehr in Serie liegenden Widerständen (131, 132, 133; 141, 142, 143) zusammengesetzt ist und so ausgelegt ist, dass dessen eines Ende mit einem positiven Pol einer in Serie liegenden Speicherbatterie (101; 102) verbunden ist, und dessen anderes Ende mit einem negativen Pol derselben Speicherbatterie (101; 102) verbunden ist, und dass er ein Mittelpunktpotential bestimmt, das höher ist als das Potential des negativen Pols, und das niedriger ist als das Potential des positiven Pols;
   ein Verarbeitungsmittel (115; 125) zum Erfassen eines Zustands der Speicherbatterie (101; 102); und
   zwei oder mehr Kommunikationsmittel (111; 121) an entsprechende Potentialen des negativen Pols der mehreren Speicherbatterien (101), um den Verarbeitungsmitteln (115; 125) zu ermöglichen, mit den Verarbeitungsmitteln (115, 125) einer weiteren Überwachungsvorrichtung zu kommunizieren, oder dem Verarbeitungsmittel (112) zu ermöglichen, mit einer externen Steuereinrichtung (105) zu kommunizieren;
   **dadurch gekennzeichnet, dass** ferner Signalisolierungsmittel (116, 117; 126, 127) vorhanden sind, um bei der Kommunikation zwischen den Verarbeitungsmitteln (115; 125) oder bei der Kommunikation mit der externen Steuereinrichtung (105) eine Signalisolierung zu erzielen;
   wobei die Verarbeitungsmittel (115; 125) mit den Mittelpunktpotentialen verbunden sind, die durch die zusammengebauten Widerstände bestimmt sind, und:

      ein Stromerfassungsmittel (115) zum Erfassen von Strom haben, der in dem zusammengebauten Widerstand (114) fließt,
      oder
      ein Spannungserfassungsmittel zum Erfassen der Spannung eines Abschnitts der zusammengebauten Widerstände haben,

   wobei das Stromerfassungsmittel (115) oder das Spannungserfassungsmittel dazu eingerichtet ist, ein Versagen des Signalisolierungsmittels (116, 117, 126, 127) unter Verwendung der erfassten Stromstärke oder der erfassten Spannung zu bestimmen.

2. Speicherbatteriesystem, das mehrere in Serie liegende Speicherbatterien (101, 102) und mehrere Überwachungsvorrichtungen (110, 120) nach Anspruch 1 zum Erfassen der entsprechenden Zustände der Speicherbatterien (101, 102) aufweist, wobei die zusammengebauten Widerstände aus zwei oder mehr Widerständen (131, 132, 133; 141, 142, 143) der Überwachungsvorrichtungen (110, 120) zusammengesetzt sind, deren eines Ende mit einem positiven Pol der entsprechenden Speicherbatterie (101; 102) verbunden ist, und deren anderes Ende mit einem negativen Pol derselben Speicherbatterie (101; 102) verbunden ist.

3. Speicherbatteriesystem nach Anspruch 2, das das Stromerfassungsmittel (115) enthält, wobei das Stromerfassungsmittel (115) einen Strom eines Abschnitts der zusammengebauten Widerstände erfasst, der ein Potential aufweist, das höher ist als das Mittelpunktpotential.

4. Speicherbatteriesystem nach Anspruch 2, das das Spannungserfassungsmittel enthält, wobei das Spannungserfassungsmittel die Spannung zwischen beiden Enden eines Messwiderstands erfasst, der das Mittelpunktpotential an einem seiner Enden unter den zwei oder mehr Widerständen (131, 132, 133; 141, 142, 143) aufweist.

5. Speicherbatteriesystem nach Anspruch 4, wobei der Messwiderstand einen Anschluss aufweist, der mit dem Mittelpunktpotential verbunden ist, das geringer ist als das Potential des anderen Anschlusses.

6. Hybrides Schienenfahrzeug, das das Speicherbatteriesystem nach einem beliebigen der Ansprüche 2 bis 5 als eine Stromversorgungsvorrichtung nutzt.

**Revendications**

1. Dispositif de surveillance (110) comprenant :

   une résistance assemblée constituée de deux ou plusieurs résistances (131, 132, 133 ; 141, 142, 143) reliées en série, configurée pour avoir une extrémité reliée à une borne positive d'une batterie de stockage (101 ; 102) reliée en série et l'autre extrémité reliée à une borne négative de la même batterie de stockage (101 ; 102), et déterminant un potentiel de point médian supérieur au potentiel de borne négative et inférieur au potentiel de borne positive ;
   un moyen de traitement (115 ; 125) destiné à détecter un statut de la batterie de stockage (101 ; 102) ; et
   deux ou plusieurs moyens de communication (111 ; 121) à des potentiels de borne négative respectifs de la pluralité de batterie de stockage (101 ; 102) pour permettre au moyen de traitement (115 ; 125) de communiquer avec le moyen de traitement (115 ; 125) d'un autre dispositif de surveillance ou pour permettre au moyen de traitement (112) de communiquer avec un dispositif de commande externe (105) ;
   **caractérisé en ce qu'**il comprend en outre un moyen d'isolation de signal (116, 117 ; 126, 127) destiné à obtenir une isolation de signal dans la communication entre les moyens de traitement (115 ; 125) ou la communication avec ledit dispositif de commande externe (105) ;
   dans lequel les moyens de traitement (115 ; 125) sont relié aux potentiels de point médian déterminés par les résistances assemblées, et :

   - comportent un moyen de détection de courant (115) destiné à détecter le courant traversant la résistance assemblée (114), ou
   - comportent un moyen de détection de tension destiné à détecter la tension d'une partie des résistances assemblées,

   dans lequel le moyen de détection de courant (115) ou le moyen de détection de tension sont configurés pour déterminer une panne du moyen d'isolation de signal (116, 117 ; 126, 127) à l'aide du courant détecté ou de la tension détectée.

2. Système de batteries de stockage comprenant une pluralité de batterie de stockage (101 ; 102) reliées en série et une pluralité de dispositifs de surveillance (110, 120) selon la revendication 1, pour la détection des statuts respectifs des batteries de stockage (101 ; 102), les résistances assemblées constituées de deux ou plusieurs résistances (131, 132, 133 ; 141, 142, 143) des dispositifs de surveillance (110, 120) présentant une extrémité reliée à une borne positive de la batterie de stockage (101 ; 102) respective et l'autre extrémité reliée à une borne négative de la même batterie de stockage (101 ; 102).

3. Système de batteries de stockage selon la revendication 2, comprenant le moyen de détection de courant (115), dans lequel le moyen de détection de courant (115) détecte un courant d'une partie des résistances assemblées présentant un potentiel plus élevé qu'un potentiel de point médian.

4. Système de batteries de stockage selon la revendication 2, comprenant le moyen de détection de tension, dans lequel le moyen de détection de tension détecte la tension entre les deux extrémités d'une résistance de mesure présentant le potentiel de point médian à une extrémité de celle-ci parmi les deux ou plusieurs résistances (131, 132, 133 ; 141, 142, 143).

5. Système de batteries de stockage selon la revendication 4, dans lequel la résistance de mesure présente une borne reliée au potentiel de point médian présentant un potentiel inférieur à celui de l'autre borne.

6. Véhicule ferroviaire hybride utilisant le système de batteries de stockage présenté dans l'une quelconque des revendications 2 à 5 comme dispositif d'alimentation en puissance.

# FIG. 1

# FIG. 2

# FIG. 3

# FIG. 4

START

701
COMMUNICATION PORT L WAITS REQUIREMENT COMMAND

RECEPTION

702
READ STORAGE BATTERY VOLTAGE

703
CHECK INSULATION FAILURE

704
TERMINAL?

TRUE

FALSE

706
COMMUNICATION PORT H TRANSFERS REQUIREMENT COMMAND

705
GENERATE RESPONSE DATA

707
COMMUNICATION PORT H WAITS RESPONSE DATA

RECEPTION

708
UPDATE RESPONSE DATA

709
COMMUNICATION PORT L SENDS RESPONSE DATA

**FIG. 5**

START

READ OUT DETECTION VOLTAGE Va OF ANALOG INPUT PORT | 602

$V2+\alpha < Va$ | 603

TRUE

FALSE

$Va < V2-\alpha$ | 604

TRUE

FALSE 606

STORE "ABNORMALITY OF SIGNAL PROCESSING MEANS 116" | 605

STORE "ABNORMALITY OF SIGNAL PROCESSING MEANS 117" | 607

STORE "NORMAL"

END

## FIG. 6

MICRO-
COMPUTER
125

701 702 704 709 701

703 705

802

801

MICRO-
COMPUTER
115

701 703 706 707 709 701

702 704 708

801

802

CONTROL
UNIT
105

T1 T2

TIME

# FIG. 7

| DATA No. | DATA |
|---|---|
| 1 | **VOLTAGE OF PROCESS 702** |
| 2 | **RESULT OF PROCESS 703** |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9139237 A

- EP 1289096 A2